# EUROPEAN PATENT SPECIFICATION

(11) **EP 2 945 001 B1**
(45) Date of publication and mention of the grant of the patent: **19.09.2018**
(21) Application number: 15166808.4
(22) Date of filing: 07.05.2015
(51) Int. Cl.: G02B 27/01, G02B 26/10

(54) **HEAD-UP DISPLAY APPARATUS WITH SHEAR DEFORMATION INTRODUCED IN AN INTERMEDIATE IMAGE**
HEAD-UP-ANZEIGEVORRICHTUNG MIT EINGEFÜHRTER SCHERUNGSDEFORMATION IN EINEM ZWISCHENBILD
DISPOSITIF D'AFFICHAGE TÊTE HAUTE AVEC DÉFORMATION EN CISAILLEMENT INTRODUITE DANS UNE IMAGE INTERMÉDIARE

(30) Priority: 12.05.2014 JP 2014098283; 13.03.2015 JP 2015050211
(43) Date of publication of application: 18.11.2015
(73) Proprietor: Ricoh Company, Ltd., Tokyo 143-8555 (JP)
(72) Inventor: Ichii, Daisuke, Tokyo, 143-8555 (JP); Saisho, Kenichiroh, Tokyo, 143-8555 (JP); Inamoto, Makoto, Tokyo, 143-8555 (JP)
(74) Representative: J A Kemp

(56) References cited:
- EP-A1- 2 570 843
- DE-A1-102010 041 961
- JP-B2- 4 474 711

## Description

### BACKGROUND

### Technical Field

Example embodiments of the present invention relate to an image display apparatus.

### Background Art

Conventionally, a heads-up display (HUD) is known in which the light that indicates information to be displayed is guided to the front windshield of a vehicle such that a virtual image become visually recognizable through the front windshield (see, for example, JP-4474711-B2).

It is desired, for example, in the HUD disclosed in JP-4474711-B2, that the visibility of a virtual image be improved with a relatively simple configuration.

### SUMMARY

According to an aspect of the present invention there is provided an image display apparatus configured to be installed on a vehicle as defined in any one of the accompanying claims.

Embodiments of the present invention described herein provide an image display apparatus that configured to be installed on a vehicle including an image forming unit configured to form an intermediate image and an optical system with a mirror configured to guide the light that forms the intermediate image to form a virtual image on a transmission and reflection member that is bent, where a virtual axis that connects a center of the intermediate image and a center of the effective reflection area of the mirror is oblique in all of up-and-down directions, right and left directions, and forward and backward directions so that deformation of the virtual image on the transmission and reflection member is minimised.

According to one aspect of the present invention, the visibility of a virtual image improves with a relatively simple configuration.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIGS. 1A to 1C each illustrate a selected portion of an image display apparatus according to an example embodiment of the present invention.
FIG. 2 illustrates an image display apparatus according to an example embodiment of the present invention.
FIG. 3 illustrates an image display apparatus according to an example embodiment of the present invention.
FIGS. 4A and 4B are illustrations of the formation of an intermediate image on a to-be-scanned surface, according to an example embodiment of the present invention.
FIG. 5 illustrates an effect obtained by making an intermediate image oblique, according to an example embodiment of the present invention.
FIG. 6 illustrates an image display apparatus according to an example embodiment of the present invention.
FIG. 7 illustrates the relationship between a scanning angle and a diffusion angle, according to an example embodiment of the present invention.
FIG. 8 illustrates an effect of an image on which shearing deformation is performed, according to an example embodiment of the present invention.
FIG. 9 illustrates a method of forming an image on which shearing deformation is performed, according to an example embodiment of the present invention.
FIG. 10 illustrates another method of forming an image on which shearing deformation is performed, according to an example embodiment of the present invention.
FIG. 11 illustrates another method of forming an image on which shearing deformation is performed, according to an example embodiment of the present invention.
FIG. 12 illustrates a light deflector that serves as a two-dimensional deflector, according to the present example embodiment.
FIG. 13 illustrates the hardware configuration of an image display apparatus according to an example embodiment of the present invention.
FIG. 14 is a functional block diagram of an image display apparatus according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

Example embodiments of the present invention are described below.

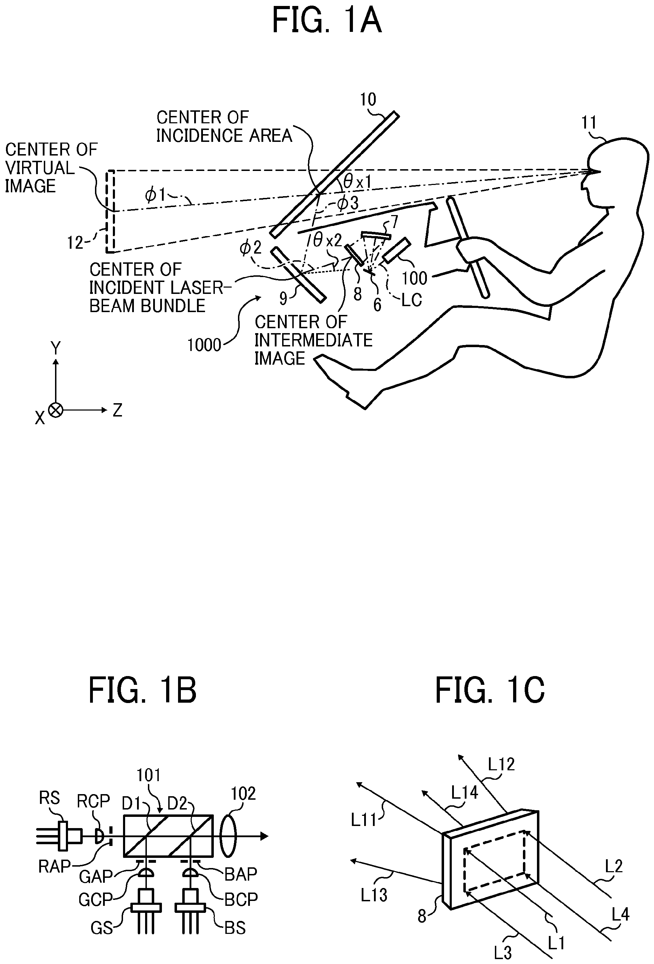

An image display apparatus 1000 according to an example embodiment of the present invention is a heads-up display (HUD) that displays a two-dimensional color image. FIG. 1A is a schematic diagram of a portion of the image display apparatus 1000.

The image display apparatus 1000 is provided, for example, for a mobile object such as a vehicle, an aircraft, and a ship, and makes navigation information used for operating the mobile object (for example, speed and mileage) visible through a front windshield 10 of the mobile object. In such cases, the front windshield 10 serves as a transmission and reflection member that transmits a portion of the incident light and reflects at least some of the remaining incident light. In the following description, an XYZ three-dimensional orthogonal coordinate system that is set to the mobile object (i.e., a coordinate system that moves with the mobile object in a synchronized manner) is referred to. The X-axis direction, Y-axis direction, and Z-axis direction indicate the right and left directions of the mobile object (+X direction indicates the right direction, and -X direction indicates the left direction), the up-and-down directions of the mobile object (+Y direction indicates the up direction, and -Y direction indicates the down direction), and the forward and backward directions of the mobile object (-Z direction indicates the forward direction, and +Z direction indicates the backward direction), respectively. In the following description, cases in which the image display apparatus 1000 is provided for a vehicle (e.g., a car) are mainly described.

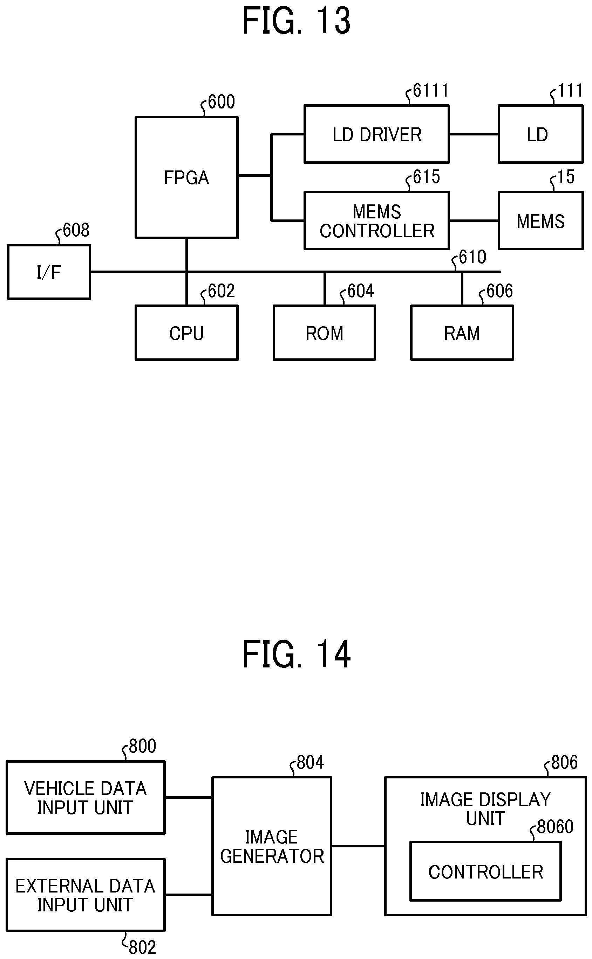

FIG. 13 illustrates the hardware configuration of the image display apparatus 1000 according to the present example embodiment. The image display apparatus 1000 includes a field programmable gate array (FPGA) 600, a central processing unit (CPU) 602, a read only memory (ROM) 604, a random access memory (RAM) 606, an interface (I/F) 608, a bus line 610, a laser diode (LD) driver 6111, a micro-electromechanical systems (MEMS) controller 615. The FPGA 600 controls the LD driver 6111 or the MEMS controller 615 to operate the LD 111 and a MEMS mirror 15 (i.e., a light deflector 15). Note that the LD 111 and the MEMS mirror together configure a light source 100, as will be described later. The CPU 602 controls operation of the image display apparatus 1000. The ROM 604 stores an image processing program that is executed by the CPU 602 to control operation of the image display apparatus 1000. The RAM 606 is mainly used as a working area in which the CPU 602 executes the program. The I/F 608 allows the image display apparatus 1000 to communicate with an external controller such as a controller area network (CAN) of a vehicle.

FIG. 14 is a functional block diagram of the image display apparatus 1000 according to the present example embodiment. The image display apparatus 1000 includes a vehicle data input unit 800, an external data input unit 802, an image generator 804, and an image display unit 806. The vehicle data input unit 800 receives vehicle-related data such as the speed and mileage of the vehicle from the CAN or the like. The external data input unit 802 receives external data such as navigation information from the global positioning system (GPS), from the external network. The image generator 804 generates an image to be displayed according to the data input from the vehicle data input unit 800 and the external data input unit 802. The image display unit 806 includes a controller 8060. The controller 8060 controls the light deflector 15 and the LD 111, to irradiate the front windshield 10 with light is irradiated with light accordingly. As a result, a magnified virtual image 12 becomes visually recognizable from the viewpoint of an observer 11.

Note that the vehicle data input unit 800 and the external data input unit 802 in FIG. 14 are implemented by the I/F 608 of FIG. 13, and the image generator 804 in FIG. 14 is implemented by the CPU 602, the ROM 604, and the RAM 606 of FIG. 13. Moreover, the image display unit 806 in FIG. 14 is implemented by the hardware configuration of the image display apparatus 1000 of FIG. 13 from which the I/F 608 is excluded.

In FIG. 1A, a light source 100 emits a pixel displaying beam LC for displaying a color image.

The pixel displaying beam LC is a bundle of beams in which beams of three colors including red (R), green (G), and blue (B) are combined.

More specifically, the light source 100 is configured, for example, as illustrated in FIG. 1B.

In FIG. 1B, semiconductor lasers RS, GS, and BS, which form a light source, emit laser beams of red, green, and blue (RGB), respectively. In the present example embodiment, laser diodes (LD), which are also referred to as end-surface emitting lasers, are used as the semiconductor lasers RS, GS, and BS. Alternatively, vertical cavity-surface emitting lasers (VCSEL) may be used as the semiconductor lasers RS, GS, and BS, instead of the end-surface emitting lasers.

As illustrated in FIG. 1B, coupling lenses RCP, GCP, and BCP control the divergence of the laser beams emitted from the semiconductor lasers RS, GS, and BS.

The laser-beam bundles of RGB colors whose divergence has been controlled by the coupling lenses RCP, GCP, and BCP are shaped by apertures RAP, GAP, and BAP. More specifically, the diameters of the laser-beam bundles of RGB colors are controlled by the apertures RAP, GAP, and BAP.

The shaped laser-beam bundles of RGB colors enter the beam combining prism 101. The beam combining prism 101 includes a dichroic film D1 that transmits the R light and reflects the G light, and a dichroic film D2 that transmits the R and G light and reflects the B light.

Accordingly, a single laser-beam bundle in which the laser-beam bundles of RGB colors are combined is emitted from the beam combining prism 101.

The emitted laser-beam bundle is converted by a lens 102 into a "collimated beam" of prescribed diameter of laser-beam bundle. This "collimated beam" corresponds to the pixel displaying beam LC.

Note that the intensity of the laser-beam bundles of RGB colors that make up the pixel displaying beam LC is modulated according to the image signal (i.e., image data) of a "two-dimensional color image" to be displayed. The intensity modulation may be performed through direct modulation in which the semiconductor lasers are directly modulated or through external modulation in which the laser-beam bundles emitted from the semiconductor lasers are modulated.

In other words, the light-emission intensity of each of the semiconductor lasers RS, GS, and BS may be modulated by a driving unit according to the image signal of RGB components.

The pixel displaying beam LC that is emitted from the light source 100 enters a two-dimensional deflector 6 that serves as an image forming element, and is two-dimensionally deflected. In the present example embodiment, the two-dimensional deflector 6 moves a minute mirror on a pivot that is formed by "two axes that are orthogonal to each other".

More specifically, the two-dimensional deflector 6 consists of micro-electromechanical systems (MEMS) that are formed as a minute pivoting mirror by semiconductor processes or the like.

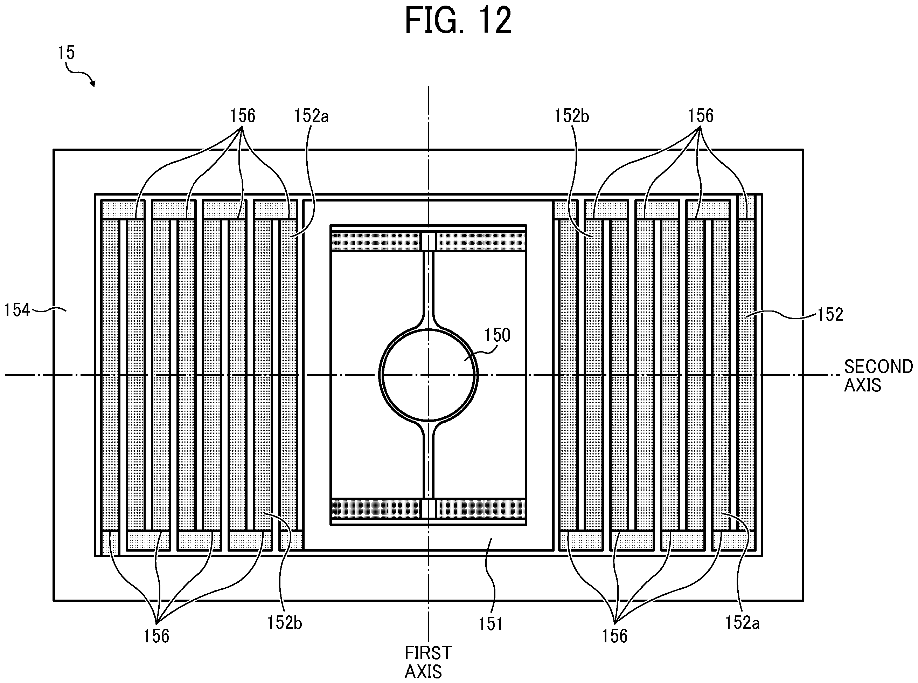

FIG. 12 illustrates a light deflector that serves as a two-dimensional deflector, according to the present example embodiment. As illustrated in FIG. 12, a light deflector 15 that is an example of the two-dimensional deflector 6 is a MEMS mirror that is manufactured by semiconductor processes. The light deflector 15 has a reflection plane, and includes a mirror 150 that is supported by a first frame 151 in a rotatable manner around a first axis, and supporting structure that supports the first frame 151 in a rotatable manner around a second axis that is orthogonal to the first axis. The supporting structure includes a pair of serpentine units 152 that are coupled to each other in such a manner that a plurality of beams meander, and a second frame 154 that supports the serpentine units. The serpentine units 152 are connected to the first frame 151 at one end, and are connected to the second frame 154 at the other end. Each of the beams of the serpentine units 152 is provided with a plurality of piezoelectric materials 156 (for example, PZT (lead zirconate titanate)). By applying different voltage to two of the piezoelectric materials 156 that are provided for the two neighboring beams 152a and 152b of the serpentine units 152, respectively, these two neighboring beams 152a and 152b warp in different directions. According to the accumulated warpage, the mirror 150 rotates around the second axis with a wide angle. Due to such configuration as above, the optical scanning around the second axis (for example, the optical scanning in the sub-scanning direction) can be performed with low voltage. On the other hand, the optical scanning with resonance around the first axis (for example, the optical scanning in the main-scanning direction) is performed using, for example, a torsion bar that is connected to the mirror 150 and a piezoelectric actuator including a cantilever and a piezoelectric material (e.g., a PZT) that are connected between the torsion bar and the first frame 151.

However, no limitation is intended thereby, and the two-dimensional deflector 6 may be, for example, combinations of two minute mirrors that pivot on a single axis in the directions that are orthogonal to each other.

The pixel displaying beam LC that has been two-dimensionally deflected as above enters a concave mirror 7, and is reflected to a to-be-scanned surface 8. The concave mirror 7 is designed to correct the bending of the scanning line (scanning trajectory) occurred on the to-be-scanned surface 8.

In other words, the concave mirror 7 corrects the deformation of an image formed on the front windshield 10 by the two-dimensionally deflected pixel displaying beam LC. The pixel displaying beam LC that is reflected at the concave mirror 7 shifts in parallel according to the deflection performed by the two-dimensional deflector 6, and enters the to-be-scanned surface 8 to scan the to-be-scanned surface 8 two-dimensionally. In other words, the to-be-scanned surface 8 is two-dimensionally scanned by light in a main-scanning direction and sub-scanning direction. More specifically, for example, raster scanning is performed in which high-speed scanning is performed in a main-scanning direction and low-speed scanning is performed in a sub-scanning direction.

By performing such a two-dimensional scanning as described above, a "two-dimensional color image" is generated on the to-be-scanned surface 8 as an intermediate image. Accordingly, the light source 100, the two-dimensional deflector 6, the concave mirror 7, and the to-be-scanned surface 8 together configure an intermediate image generator (image forming unit). Moreover, the two-dimensional deflector 6 and the concave mirror 7 together configure a scanning optical system that scans the to-be-scanned surface 8 two-dimensionally by the light from the light source 100 in a main-scanning direction and sub-scanning direction.

As a matter of course, what is displayed on the to-be-scanned surface 8 is "only the pixels that are being irradiated by the pixel displaying beam LC at that time".

A two-dimensional color image is formed as a "set of pixels that are momentarily displayed" realized by two-dimensional scanning using the pixel displaying beam LC. A "two-dimensional color image" is formed on the to-be-scanned surface 8 as described above, and the light of the image data on a pixel by pixel basis enters the concave mirror 9 and is reflected.

The to-be-scanned surface 8 includes a "minute convex lens arrangement", as will be described later. The concave mirror 9 configures a "virtual image forming optical system" (projection optical system).

The concave mirror 9 is designed and arranged to correct a factor in optical deformation in which the horizontal line (i.e., the straight line that extends in the right and left directions) of the "two-dimensional color image" (i.e., intermediate image) formed on the to-be-scanned surface 8 become convex upward or downward due to the influence of the front windshield 10.

The "virtual image forming optical system" forms the magnified virtual image 12 of the "two-dimensional color image". The windshield 10 is arranged between the image forming position of the magnified virtual image 12 and an observer 11, and the front windshield 10 reflects the laser-beam bundle that forms the magnified virtual image 12 towards the observer 11. The observer 11 (for example, a driver of the mobile object) visually recognizes the virtual image at a prescribed position on the optical path of the laser beam reflected by the front windshield 10 (i.e., transmission and reflection member).

The observer 11 visually recognizes the magnified virtual image 12 by the light reflected towards the observer 11 as above.

In FIG. 1A, the Y-axis direction usually corresponds to the up-and-down directions for the observer 11, and the Y-axis direction is also referred to as a "vertical direction".

In FIG. 1A, the X-axis direction usually corresponds to the right and left directions for the observer 11, and the X-axis direction is also referred to as a "lateral direction".

As described above, the to-be-scanned surface 8 has a minute convex lens arrangement. As will be described later, the minute convex lens arrangement has "a plurality of minute convex lenses (microlenses) that are closely arranged at a pitch close to the pitch of pixels". In other words, the to-be-scanned surface 8 is a microlens array.

In the present example embodiment, the multiple minute convex lenses are two-dimensionally arranged at a prescribed pitch along an assumed plane parallel with the X-axis direction such that each of the convex surfaces of the minute convex lenses becomes an incidence plane. More specifically, the minute convex lenses may be arranged, for example, in a honeycomb array (zigzag array) or in a matrix where the X-axis direction is set to the row direction and the direction orthogonal to the X-axis direction in the assumed plane is set to the column direction.

The planar shape of the minute convex lenses may be, for example, a circle, a regular triangle, a square, or other regular shapes with a greater number of angles. In the present example embodiment, it is assumed that the minute convex lenses have equal curvature (radius of curvature).

Each of the minute convex lenses isotropically diffuses the pixel displaying beam LC. In other words, each of the minute convex lenses has omnidirectionaly even diffusing power. Such "diffusing function" is briefly described below.

FIG. 1C illustrates four pixel displaying beams L1 to L4 that enter the to-be-scanned surface 8, according to the present example embodiment.

The four pixel displaying beams L1 to L4 enter the to-be-scanned surface 8 at the four corners of the two-dimensional image formed on the to-be-scanned surface 8.

As the four pixel displaying beams L1 to L4 passes through the to-be-scanned surface 8, the pixel displaying beams L1 to L4 are converted into beams L11 to L14.

Assuming that a laser-beam bundle whose cross section is a horizontally oriented quadrangle surrounded by the pixel displaying beams L1 to L4 enters the to-be-scanned surface 8, such a laser-beam bundle becomes a "divergent laser-beam bundle whose cross section is a horizontally-oriented quadrangle surrounded by the beams L11 to L14".

The function of the minute convex lenses as described above is referred to as the "diffusing function".

The "divergent laser-beam bundle whose cross section is a horizontally-oriented quadrangle surrounded by the beams L11 to L14" is obtained by temporally collecting the pixel displaying beam that has been converted into a divergent laser-beam bundle as described above.

The pixel displaying beam is diffused such that "the laser-beam bundle reflected at the front windshield 10 irradiates a wider area in the proximity of the observer 11".

When the diffusing function described above is not available, the laser-beam bundle reflected at the front windshield 10 irradiates only a "small area in the proximity of the observer 11".

For this reason, when the observer 11 moves his/her head and the position of the eyes deviates from the "small area", the observer 11 can no longer visually recognize the magnified virtual image 12.

By diffusing the pixel displaying beam as described above, the laser-beam bundle reflected at the front windshield 10 irradiates a "wide area in the proximity of the observer 11".

Accordingly, even if the observer 11 "slightly moves his/her head", the observer can visually recognize the magnified virtual image with reliability.

The HUD as described above may be provided, for example, for a vehicle such as a car, and the X-axis direction and the Y-axis direction indicate "the right and left directions with reference to a driver's seat" and "the up-and-down directions with reference to the driver's seat", respectively.

According to the present example embodiment, for example, a "navigation image" can be displayed ahead of the front windshield of a car or the like as the magnified virtual image 12, and a driver as the observer 11 can observe such a navigation image without moving his/her line of vision away from the ahead of the windshield while staying in the driver's seat.

In such an embodiment, it is desired that the magnified virtual image be a "horizontally-oriented image when seen from a driver", as described above. In other words, it is desired that the image formed on a microlens and the magnified virtual image be an image whose angles of view is wider in the X-axis direction.

It is also desired that "the viewing angle be wider in the lateral direction than in the vertical direction" such that a driver as the observer can recognize the displayed image even in a slanting direction from the right and left sides. For this reason, a greater diffusion angle (anisotropic diffusion) is required for the longer-side direction (i.e., X-axis direction) of the magnified virtual image, with reference to the shorter-side direction (i.e., Y-axis direction) of the magnified virtual image.

Accordingly, it is desired that the minute convex lenses of the to-be-scanned surface 8 be anamorphic lenses whose curvature is greater in the longer-side direction than in the shorter-side direction of an image formed on a microlens or a magnified virtual image, and that the diffusion angle of the pixel displaying beam be "wider in the lateral direction than in the vertical direction of a two-dimensional image".

As described above, according to the example embodiment of the present invention, the utilization efficiency of light and the brightness of display image can be improved as the light is dispersed to a minimum area that satisfies the desired angle of view of a HUD.

As a matter of course, "isotropic diffusion" in which the diffusion angle is equal between the lateral direction and the vertical direction may be applied instead of the "anisotropic diffusion" described above. However, as long as a vehicle-installed HUD for a car or the like is concerned, there are few cases in which the driver observes a displayed image from up-and-down directions. Accordingly, as long as a vehicle-installed HUD is concerned, it is desired that the diffusion angle of the pixel displaying beam be "wider in the lateral direction than in the vertical direction of a two-dimensional image" as described above in view of the utilization efficiency of light.

Conventionally, it is known that the surface of a minute convex lens (microlens) can be formed as "aspherical surface".

The anamorphic lens has "aspherical surface", and the use of such an anamorphic lens enables the aspherical surface of a minute convex lens as desired. Moreover, the use of the anamorphic lens can perform aberration correction.

Due to the aberration correction, "nonuniformity in diffusion intensity" may be reduced.

The application of the HUD according to the example embodiment of the present invention is not limited to a car as described above, but the HUD may be applied to various kinds of operable mobile objects such as trains, ships, helicopters, and aircrafts.

As a matter of course, the HUD according to the present example embodiment may be implemented, for example, as a "image display apparatus for movie viewing".

The minute convex lenses in the minute convex lens arrangement diffuse the pixel displaying beam as described above, but may diffuse the pixel displaying beam only in a single direction between the X-axis direction and the Y-axis direction.

In such cases where diffusion is performed only in a single direction, "minute convex cylinder surface" may be applied to the lens surface of the minute convex lenses.

The shape of the minute convex lens may be shaped as a hexagon, and the minute convex lenses may be arranged like a honeycomb. Such variations are conventionally known in the art of micro lens array manufacturing method.

The market expectations for the HUD as the image display apparatus 1000 described above are running high as application by which a driver can recognize an alert or other kinds of information with a little movement of his/her line of sight. In recent years, the technology development of HUDs for vehicles (for example, cars, motorbikes, trains) are advancing in particular.

The HUDs are broadly divided into a windshield projection type in which the light that forms the image is projected towards the front windshield and a combiner projection type in which the light that forms the image is projected towards a transmission and reflection member (combiner). In view of the interior design of a vehicle or discomfort caused by an obstructing combiner, HUDs of the front-windshield projection type are preferred.

As known in the art, a HUD of the front-windshield projection type is integrated into the dashboard of a vehicle, and serves as a module (image display apparatus) that reflects an intermediate image formed inside the dashboard to the front windshield using a mirror or the like to display the magnified virtual image 12 with certain distance from the viewpoint of the observer 11. The observer 11 may be referred to as the driver 11 in the following description. Note that the viewpoint of the observer 11 merely indicates a reference position (reference eye point). It is assumed that the range of the viewpoint of the observer 11 is equal to or less than the eye range of car driver (JIS D 0021).

The demands for HUDs in the market are summarized in the following two points: downsizing; and stress-free visual recognition.

In regard to the "downsizing", a size is desired that does not interfere the ducts, meters, and defroster stored in the dashboard, and the body structure. This is because changes in the position of ducts, meters, and defroster or the changes in body structure due to the installation of a HUD lead to reduction in air-conditioner performance, defroster performance, and the body strength of the car.

In regard to the "stress-free visual recognition", stress-free graphic is desired for the environment of a driver because a HUD displays graphics around his/her sight at all times. If the graphics lacks "instant readability", for example, when the information is hard to read or the information is deformed and awkward, the HUD that serves as an information display apparatus (image display apparatus) may become an impairing factor for the sight of the driver.

As the projection method of HUD, a "panel system" in which an intermediate image is formed by an imaging device such as a liquid crystal panel or digital micromirror device (DMD) panel, or a "optical scanning system" in which an intermediate image is formed by performing two-dimensional optical scanning on a to-be-scanned surface are known in the art.

In particular, the "optical scanning system" is advantageous in achieving "Downsizing" and "Stress-free visual recognition" because an intermediate image can be formed by optical design without being influenced by the performance of the installed imaging device.

In the conventional HUD of the front-windshield projection type, an area of the front windshield that the light that forms an intermediate image enters is bent asymmetrically in the right and left direction and thus optical deformation is asymmetrically caused on the virtual image. An attempt to correct such optical deformation by the design of the projection optical system (i.e., the optical system that guides the light that has passed through a to-be-scanned surface to the front windshield) typically leads to an increase in the number of the optical elements in the projection optical system, and such an increase affect the "Downsizing".

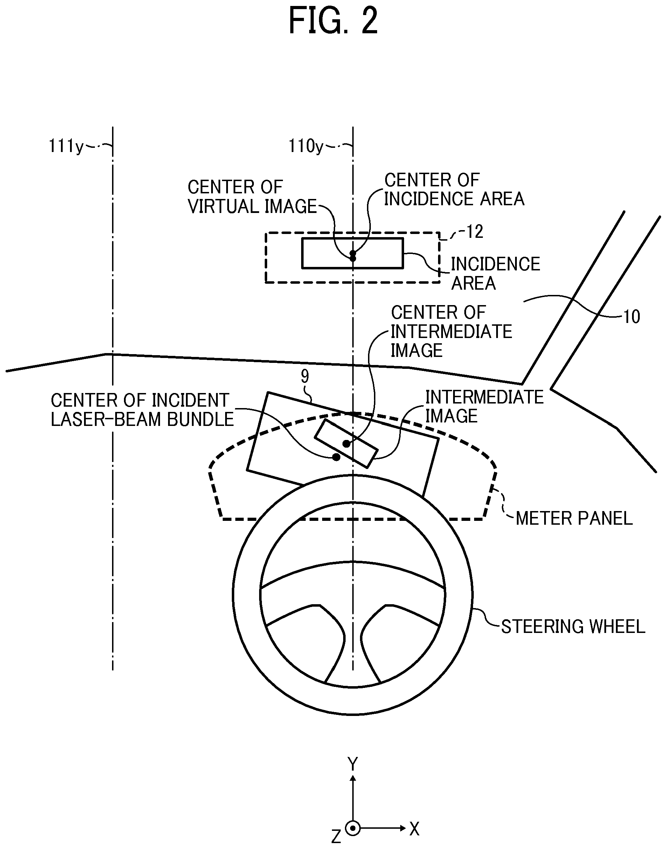

In detail, as illustrated in FIG. 2 for example, the front windshield 10 is gradually bent backward from a center position 111y of the right and left directions of the vehicle (X-axis direction) to the door side on the right (on +X side), and an upper portion of the front windshield 10 in the up-and-down directions of the vehicle (Y-axis direction) is obliquely bent backward (on +Y side).

In other words, the front windshield 10 is asymmetrically bent backward (where a right portion of the front windshield is bent backward to a greater degree) with reference to a center position 110y in the right and left directions corresponding to the driver's seat of the vehicle, and an upper portion of the front windshield 10 in the up-and-down directions of the vehicle is obliquely bent backward.

The light that has passed through the to-be-scanned surface 8 and the concave mirror 9 enters the incidence area of the front windshield 10 (on -Z side), and the light that is reflected at the incidence area enters the eyes of the driver 11. As a result, the driver 11 can visually recognize the magnified virtual image 12 (see FIG. 2). However, the incidence area is also asymmetrically bent backward (where a right portion of the windshield is bent backward to a greater degree), and an upper portion of the incidence area in the up-and-down directions of the vehicle is obliquely bent backward. More specifically, the front windshield 10 is gradually bent so as to be oblique to the Y-axis direction and convex towards the +Y side. Note that the center of the incidence area and the center of the magnified virtual image 12 in the X-axis direction coincide with the center position 110y.

Accordingly, when an image whose longer-side direction is parallel to the X-axis direction is formed on the to-be-scanned surface 8, deformation may be caused on the virtual image to be visually recognized by the driver 11 due to the horizontally-asymmetrical shape of the incidence area.

Moreover, when an image parallel to the XY plane is formed on the to-be-scanned surface 8 upon arranging the to-be-scanned surface 8 parallel to the XY plane, deformation may be caused on the virtual image to be visually recognized by the driver 11 due to the bent shape of the incidence area.

The deformation as described above is caused to a greater degree when the magnifying power of the image (i.e., intermediate image), in particular, the magnifying power of the projection optical system, is large and the virtual image is large in the HUD.

Here, the deformation on the virtual image when a HUD of the front-windshield projection type whose projection optical system has the only one concave mirror 9 is installed in a vehicle with right-side steering wheel is described. For the purpose of simplification, it is assumed in the present example embodiment that a reflection plane of the concave mirror 9 is planar and the front windshield 10 is shaped like a flat plate.

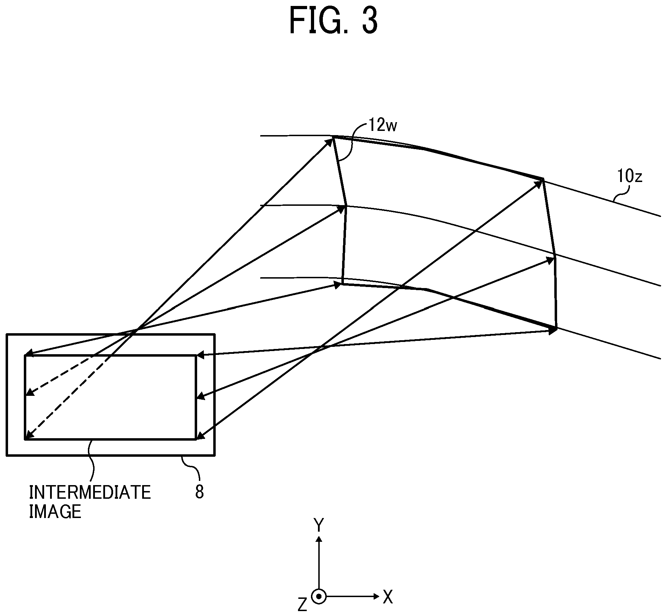

FIG. 3 illustrates a state in which an image (intermediate image) whose longer-side direction is parallel to the horizontal plane (i.e., XZ plane) is formed on the to-be-scanned surface 8 and the points of the to-be-scanned surface are projected onto the front windshield 10.

As described above, the front windshield 10 is a transmission and reflection member that is convex in the +Y direction. Accordingly, when depth lines 10z are plotted on the front windshield 10 in the Z-axis direction (i.e., the forward and backward directions of the vehicle), such depth lines 10z are gradually oblique to the door side on the right (i.e., +X side).

In such cases, the incidence area of the front windshield 10 becomes as indicated by the reference sign "12w" in FIG. 3. Note that as the projection optical system has the only one concave mirror 9, the relative positions of the surface are inverted in the vertical direction due to the projection from the concave mirror 9 to the front windshield 10 (see FIG. 1A).

Due to the gradually-oblique shape of the windshield 10 as described above, a deformed mode is present in which, for example, the incidence area of the front windshield 10 as indicated by the reference sign 12w is "oblique to the door side" or "deformed as distant from the center line of the vehicle", as a factor in optical deformation in which the shape of the front windshield 10 on the driver's seat side (i.e., right side) is reflected.

In the present example embodiment, such a deformed mode is dealt with as follows, as illustrated in FIG. 2.
(1) The longer-side direction of the image (intermediate image) that is formed on the to-be-scanned surface 8 is made oblique to the XZ plane (i.e., the assumed plane orthogonal to the up-and-down directions of the vehicle). More specifically, the longer-side direction of the image that is formed on the to-be-scanned surface 8 is made oblique so as to be lower in the +X-axis direction (i.e., to the door side of the vehicle) with reference to the X-axis direction (i.e., the right and left directions of the vehicle) when viewed from the Z-axis direction (i.e., the forward and backward directions of the vehicle). In other words, the image that is formed on the to-be-scanned surface 8 is made oblique so as to be lower (oblique towards the -Y side) in the +X-axis direction with reference to the Z-axis direction.

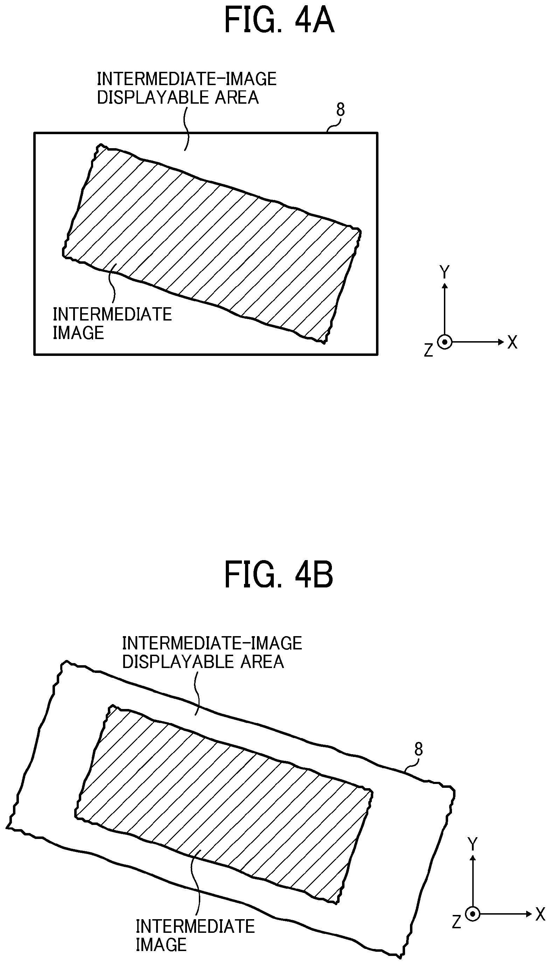

When the intermediate image is made oblique, as illustrated in FIG. 4A, only the intermediate image may be made oblique without making the to-be-scanned surface 8 oblique. Alternatively, as illustrated in FIG. 4B, the to-be-scanned surface 8 may be made oblique together with the intermediate image.

To make the intermediate image oblique, the controller 8060 may form the intermediate image by performing two-dimensional scanning where the X-axis direction is the main-scanning direction, such that the original image data generated by the image generator 804 is made oblique on the image display unit 806. Alternatively, the intermediate image may be formed by making the scanning axis of the light deflector 15 oblique in advance and then performing two-dimensional scanning where the direction oblique to the X-axis direction is the main-scanning direction, when an image is displayed on the image display unit 806 according to the original image data generated by the image generator 804.

Note that when the X-axis direction is the main-scanning direction, the pivot that corresponds to the main-scanning direction of the two-dimensional deflector 6 is to be made parallel to the Y-axis. When the direction oblique to the X-axis direction is the main-scanning direction, the pivot that corresponds to the main-scanning direction of the two-dimensional deflector 6 is to be made oblique to the Y-axis.

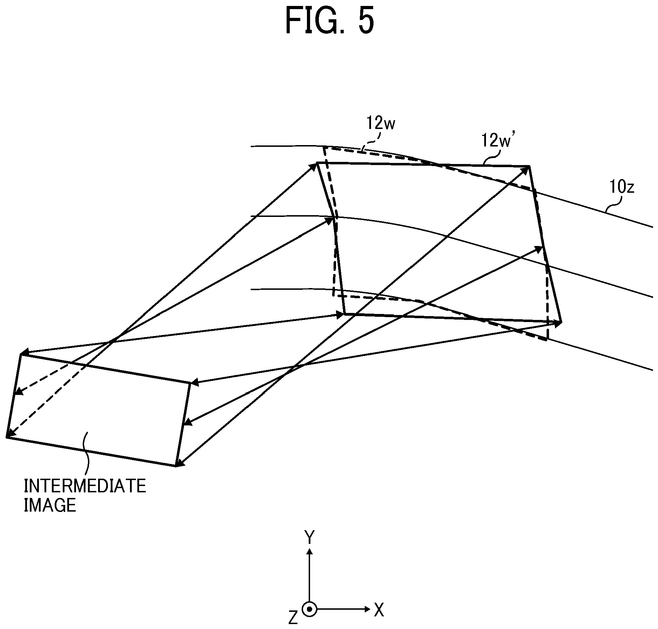

As described above, the inclination of the depth line 10z of the front windshield 10 can be corrected by making the intermediate image oblique with reference to the X-axis direction. More specifically, the incidence area of the front windshield 10 that is viewed from the driver 11 can be corrected from the area indicated by the broken lines 12w to the area indicated by a solid line 12w' (see FIG. 5). As a result, the deformation of the virtual image due to the horizontally-asymmetrical bent shape of the incidence area of the front windshield 10 may be reduced.

Note that in the present example embodiment, it is assumed that the reflection plane of the concave mirror 9 is planar and the front windshield 10 is shaped like a flat plate, and the arrangement of the to-be-scanned surface 8 and the concave mirror 9 is not taken into consideration. For this reason, a prescribed oblique direction of the intermediate image is not limited to the examples described above. As the shape of the front windshield varies for each vehicle type, it is desired that the prescribed oblique angle of the intermediate image be determined differently for each vehicle type so as to reduce the deformation of the virtual image as much as possible.

In the present example embodiment, the intermediate image (the to-be-scanned surface 8) and the incident laser-beam bundle (the concave mirror 9) are made oblique to the Y-axis direction with reference to the X-axis direction (see FIG. 1A). The term "incident laser-beam bundle" indicates the laser-beam bundle that enters the reflection plane of the concave mirror 9.

In such cases, the deformation of the virtual image, which is viewed from the X-axis direction, due to the inclination of the incidence area of the front windshield 10 with reference to the Y-axis direction can be attenuated.

In the present example embodiment, the longer-side direction of the concave mirror 9 is made oblique to the XZ plane. More specifically, the longer-side direction of the concave mirror 9 is made oblique to the X-axis direction with reference to the Z-axis direction (see FIG. 2).

In such cases, it is desired that the oblique direction of the concave mirror 9 be close to the oblique direction of the intermediate image (i.e., downward to the right), and that the oblique angle of the concave mirror 9 be equal to or less than the oblique angle of the intermediate image. Accordingly, the light that forms an intermediate image enters the concave mirror 9 with reliability.

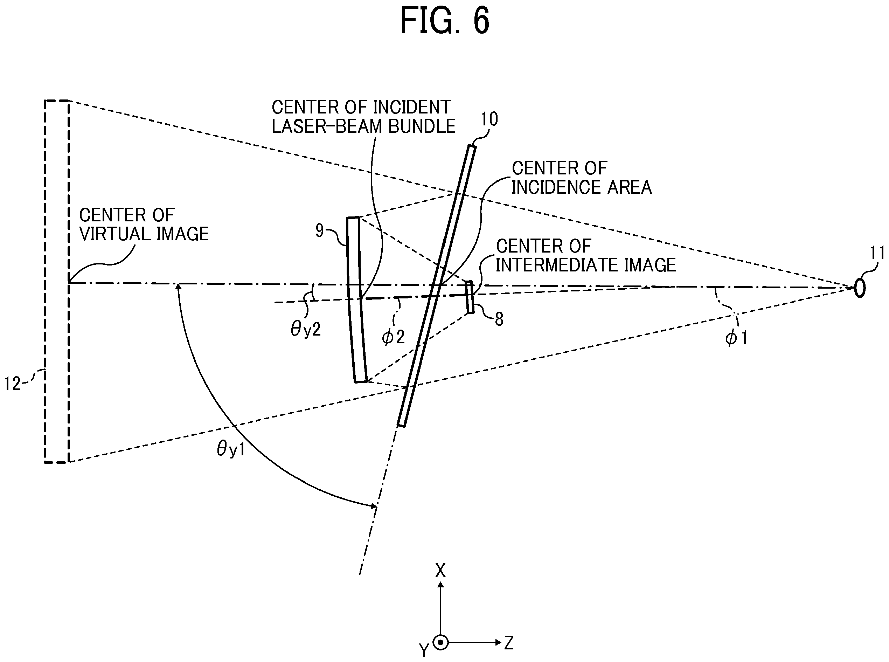

In the present example embodiment, the tangent plane around the center of the incidence area of the front windshield 10 is oblique by the angle of "θx1" to a virtual axis ϕ1 that connects between the viewpoint of the driver 11 and the center of the magnified virtual image 12 when viewed from the X-axis direction (see FIG. 1A), and is oblique by the angle of "θy1" to the virtual axis ϕ1 when viewed from the Y-axis direction (see FIG. 6). Note that the virtual axis ϕ1 goes through the center of the incidence area.

In the present example embodiment, a virtual axis ϕ2 that connects between the center of the intermediate image (i.e., the center of the to-be-scanned surface 8) and the center of the incident laser-beam bundle (i.e., the center of the reflection plane of the concave mirror 9) when viewed from the X-axis direction is obliquely by the angle of "θx2" (< θx1) (see FIG. 1A), and is oblique by the angle of "θy2" (< θy1) to the virtual axis ϕ1 when viewed from the Y-axis direction (see FIG. 6). Note that the center of the to-be-scanned surface 8 indicates that the center of the effective scanning area of the to-be-scanned surface 8. Moreover, the center of the reflection plane of the concave mirror 9 indicates the center of the effective reflection area of the concave mirror 9.

In other words, the intermediate image and the incident laser-beam bundle are oblique to the Y-axis direction when viewed from the X-axis direction, and are oblique to the X-axis direction when viewed from the Y-axis direction.

More specifically, as illustrated in FIG. 1A, center of the intermediate image (i.e., the center of the to-be-scanned surface 8) is at a position above the center of the incident laser-beam bundle (i.e., the center of the concave mirror 9) and below the center of the incidence area, with reference to the up-and-down directions of the vehicle (i.e., the Y-axis direction). Moreover, the center of incident laser-beam bundle is at a position ahead of the center of the intermediate image and the center of the incidence area, with reference to the forward and backward directions of the vehicle (i.e., the Z-axis direction).

As illustrated in FIG. 2, the center of the incident laser-beam bundle, the center of the intermediate image, and the center of the incidence area are positioned in the listed order with reference to the right and left directions of the vehicle (i.e., the X-axis direction). More specifically, the center of the incident laser-beam bundle, the center of the intermediate image, and the center of the incidence area are positioned in the listed order from the right side to left side of the vehicle with right-side steering wheel (i.e., from the -X side to the +X side).

Accordingly, the virtual axis ϕ2 is oblique with reference to the up-and-down directions of the vehicle (i.e., the Y-axis direction) by an angle different from that of the tangent plane when viewed from the X-axis direction, and is oblique with reference to the right and left directions of the vehicle (i.e., the X-axis direction) by an angle different from that of the tangent plane when viewed from the Y-axis direction.

Under such conditions, the direction of travel of the main light beam of the laser-beam bundles that form the intermediate image from the to-be-scanned surface 8 to the concave mirror 9 (the light beam having an angles of view that passes through the center of the laser-beam bundle) is obliquely with reference to the tangent plane when viewed from both the X-axis direction and the Y-axis direction.

Accordingly, the deformation of the virtual image due to an oblique angle θx1 with reference to the virtual axis ϕ1 of the tangent plane as viewed from the X-axis direction and the deformation of the virtual image due to an oblique angle θy1 with reference to the virtual axis ϕ1 of the tangent plane as viewed from the Y-axis direction can be attenuated.

When the intermediate image is made oblique in the X-axis direction from the Z-axis direction (first inclination), when the he intermediate image is made oblique in the Y-axis direction from the X-axis direction (second inclination), and when the virtual axis ϕ2 is made oblique with reference to the tangent plane from the X-axis direction and the Y-axis direction (third inclination), it is desired that the oblique directions and the oblique angles be adjusted to each other such that the deformation of the virtual image due to the shape of the incidence area is attenuated as much as possible. The first to third inclinations as described above are not necessarily performed all together. In other words, only the first or third inclination may be performed, or only the first and second inclinations may be performed. Moreover, only the second and third inclinations may be performed, or only the first and third inclinations may be performed.

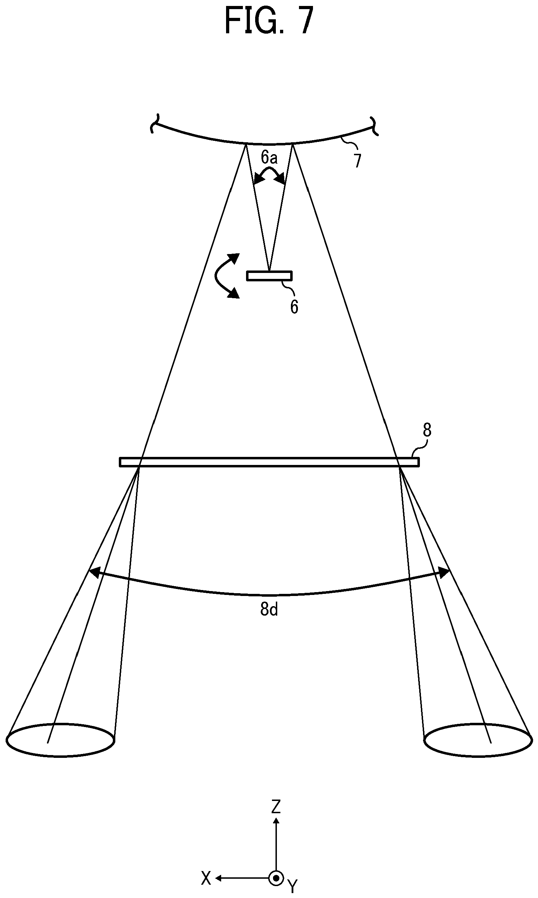

According to the present example embodiment, the beam (laser-beam bundle) that enters the to-be-scanned surface 8 and the beam (laser-beam bundle) that exits from the to-be-scanned surface 8 have the following features (2) to (4).
(2) The beam that enters the to-be-scanned surface 8 has incidence angle distribution that gradually becomes wider from the central portion to the edges in the main-scanning direction of the to-be-scanned surface 8 (see FIG. 7). FIG. 7 illustrates a state in which the scanning optical system and the to-be-scanned surface 8 are viewed from the shorter-side direction (i.e., the Y-axis direction).
(3) The full width of the up-and-down and right-and-left angles of the laser-beam bundle dispersed from the to-be-scanned surface 8 is greater than the angle of deflection (scanning angle) of the beam that enters the to-be-scanned surface 8. More specifically, the angle of deflection (scanning angle) of the beam that is deflected by the two-dimensional deflector 6 is magnified the concave mirror 7 (scanning mirror), and is further magnified by the to-be-scanned surface 8. In other words, between the scanning angle 6a of the beam deflected by the two-dimensional deflector 6 and the width of the all laser-beam bundle 8d when the deflected beam has passed through the to-be-scanned surface 8 (diffusion angle), the latter is larger (see FIG. 7). Moreover, the full width of the up-and-down and right-and-left angles of the laser-beam bundle dispersed from the to-be-scanned surface 8 is smaller than the maximum range of angle that can enter the concave mirror 9. In other words, all the beam that has passed through the to-be-scanned surface 8 enters the reflection plane of the concave mirror 9.
(4) The length of the longer-side direction (i.e., the direction corresponding to the main-scanning direction) of the reflection plane of the concave mirror 9 is larger than the distance between the center of the to-be-scanned surface 8 and the center of the concave mirror 9. In other words, it is desired that the maximum dimension of the reflection plane of the concave mirror 9 (for example, the dimension of the diagonal line) be longer than the length of the virtual axis ϕ2 that connects the center of intermediate image and the center of the incident laser-beam bundle.

According to the features (2) to (4) as described above, even in an optical layout in which "the dimension of the concave mirror 9 is larger than the distance between the to-be-scanned surface 8 and the concave mirror 9", the light beams can be guided to the edge of an image, and a high-powered optical system can be implemented.

When the feature (2) is not achieved, the degree of divergence of the laser-beam bundles that are emitted from the to-be-scanned surface 8 becomes smaller, and a high-powered optical layout (i.e., the layout described above in (4)) cannot be implemented. In such cases, it becomes necessary for the distance between the to-be-scanned surface 8 and the concave mirror 9 to be increased to implement a virtual image of the same size as that of the present example embodiment. Accordingly, the size of the apparatus increases.

When the feature (3) is not realized (pattern 1), i.e., when the full width of the up-and-down and right-and-left angles of the laser-beam bundle dispersed from the to-be-scanned surface 8 is smaller than the angle of deflection (scanning angle) of the beam that enters the to-be-scanned surface 8, the degree of divergence of the laser-beam bundles that are emitted from the to-be-scanned surface 8 becomes smaller, and a high-powered optical layout (i.e., the layout described above in (4)) cannot be implemented. In such cases, it becomes necessary for the distance between the to-be-scanned surface 8 and the concave mirror 9 to be increased to implement a virtual image of the same size as that of the present example embodiment. Accordingly, the size of the apparatus increases.

When the feature (3) is not realized (pattern 2), i.e., when the full width of the up-and-down and right-and-left angles of the laser-beam bundle dispersed from the to-be-scanned surface 8 is greater than both the concave mirror 9 and the angle of deflection (scanning angle) of the beam that enters the to-be-scanned surface 8, the beams that are emitted from the to-be-scanned surface 8 deviate from the concave mirror 9, and the light quantity is lost. Here, the full width of the angle of the dispersed laser-beam bundle is defined as the angle that corresponds to half the maximum intensity of the beam profile of the dispersed laser-beam bundle (full width at half maximum (FWHM)).

When the feature (4) is not realized, the degree of divergence of the laser-beam bundles that are emitted from the to-be-scanned surface 8 becomes smaller. In such cases, it becomes necessary for the distance between the to-be-scanned surface 8 and the concave mirror 9 to be increased to implement a virtual image of the same size as that of the present example embodiment. Accordingly, the size of the apparatus increases.

According to the present example embodiment, the image that is formed on the to-be-scanned surface 8 (i.e., intermediate image) has the following feature (5). Note that the intermediate image is formed by projecting the trajectory of the scanning beams on the to-be-scanned surface 8.

(5) Shearing deformation is performed on the intermediate image from the center position of the vehicle in the right and left directions to the door on the right side (in the X-axis direction).

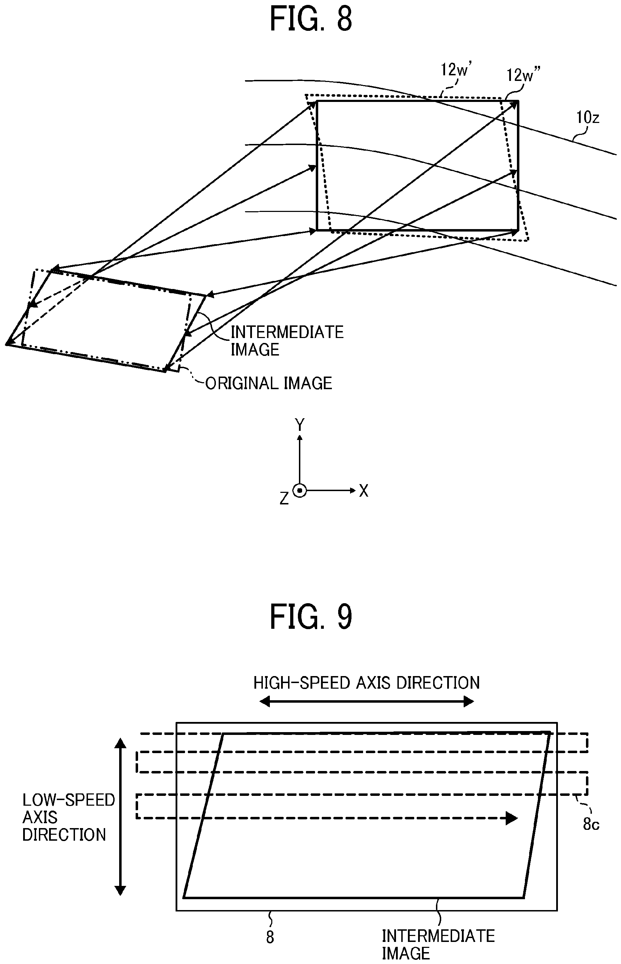

Even if the intermediate image is made oblique to the normal line to the surface of the to-be-scanned surface 8 in the direction of rotation as described above in (1), errors in magnification remain on several portion of the image due to the influence of the partial curvature of the front windshield 10, and thus a shearing strain remains as illustrated by broken lines 12w' in FIG. 8. If shearing deformation is performed in advance on the intermediate image to the door side of a vehicle with right-side steering wheel (such that a portion of the intermediate image on the +X side is deformed to move to the +Y side, i.e., such that a portion of the intermediate image on a positive side in the right and left directions is deformed to move to a positive side in the vertical direction) as illustrated in FIG. 8, "the deformation of the virtual image due to the shape of a front windshield" as described above may effectively be attenuated (see a solid line 12w" in FIG. 8). In other words, in such cases, the intermediate image is shifted in the lateral direction as illustrated in FIG. 9. Note that the shearing deformation described above is performed by the controller 8060 when the image generated by the image generator 804 is displayed on the image display unit 806.

In order to apply shearing strain to the intermediate image, for example, shearing deformation is performed on original image data (e.g., rectangular image data), and an image that corresponds to the image data on which the shearing deformation has been performed (e.g., parallelogram image data) is formed by a two-dimensional deflector. Alternatively, the start timing and end timing of scanning in the main-scanning direction may be performed with a certain time lag for every line or every set of a plurality of lines on original image data (for example, a rectangular image data) (see FIGS. 9 to 11).

Note that in the present example embodiment, it is assumed that the reflection plane of the concave mirror 9 is planar and the relative positions of the to-be-scanned surface 8 and the concave mirror 9 is not taken into consideration. For this reason, the direction of the shearing strain that is applied in advance to the intermediate image is not limited to the examples described above.

Moreover, the following characteristics are present in the present example embodiment. (6) The scanning direction of a two-dimensional deflector includes a high-speed axis direction and a low-speed axis direction along the two axes, and the high-speed axis direction corresponds to the longer-side direction of the to-be-scanned surface.

In the optical scanning system according to the example embodiment of the present invention, an image (intermediate image) is drawn with a dissonance method in the shorter-side direction, and is drawn with a resonance method in the longer-side direction because a wider amplitude is required by the two-dimensional deflector 6 in the longer-side direction. Assuming that the directions of the two axes of the two-dimensional deflector 6 are the high-speed axis direction (i.e., the main-scanning direction) and the low-speed axis direction (i.e., the sub-scanning direction), the longer-side direction of the intermediate image corresponds to the high-speed axis direction, and the shorter-side direction of the intermediate image corresponds to the low-speed axis direction.

If the high-speed axis direction and the low-speed axis direction correspond to the longer-side direction and shorter-side direction of the intermediate image, respectively, the trajectory of the scanning beam on the to-be-scanned surface 8 becomes as illustrated by an arrow with broken lines 8c in FIG. 9. By so doing, shearing deformation can be performed without deforming two or more scanning lines of the image at the same time in the X-axis direction. If the image is deformed over two or more scanning lines in the X-axis direction, a horizontal line is drawn in several sections by the two or more scanning lines, and thus a flicker appears on the horizontal line.

Here, the position of the image can accurately be adjusted along the scanning lines by the high-speed axis direction (i.e., the main-scanning direction) of the two-dimensional deflector 6, by adjusting the timing in which the light source emits light.

On the other hand, the drawing position that is finer than the intervals of the scanning lines cannot be adjusted by the low-speed axis direction (i.e., the sub-scanning direction) of the two-dimensional deflector 6.

It is known in the art that the minimum width with which an image can be adjusted is smaller in the high-speed axis direction than in the low-speed axis direction, and thus finer adjustment of the image is possible in the high-speed axis direction.

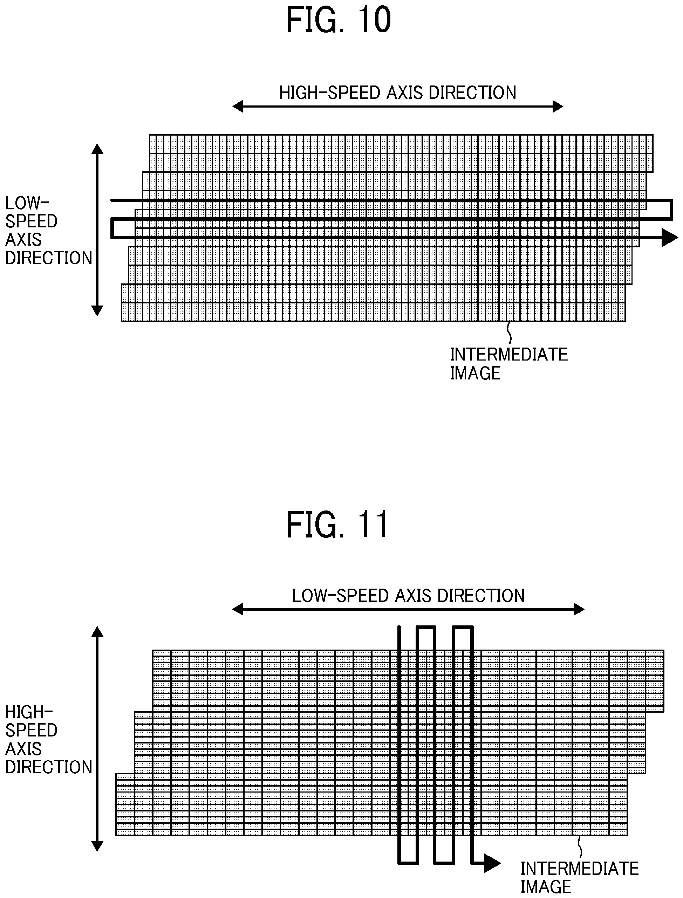

FIG. 10 is a schematic diagram of an original image (i.e., rectangular image data in this example) on which shearing deformation has been performed when the longer-side direction of the image is matched with the high-speed axis direction (i.e., the main-scanning direction) of the two-dimensional deflector, according to the present example embodiment. FIG. 11 is a schematic diagram of an original image (i.e., rectangular image data in this example) on which shearing deformation has been performed when the shorter-side direction of the image is matched with the high-speed axis direction (i.e., the main-scanning direction) of the two-dimensional deflector, according to the present example embodiment.

In FIG. 10 and FIG. 11, each small rectangular dot indicates a minimum unit that can be modified to adjust the position of an image and to deform the image.

In FIG. 10, each unit with which the position of the image is adjusted in the longer-side direction is small after shearing deformation is performed on the original image. Accordingly, the oblique lines at the edges of the image can be drawn smoothly.

In FIG. 11, by contrast, each unit with which the position of the image is adjusted in the longer-side direction is coarse in each scanning line. Accordingly, a zigzag tends to be visually recognized in the oblique lines at the edges of the image.

As illustrated in FIG. 1A, in the present example embodiment, it is necessary for the projection light (i.e., the light projected from the projection optical system) to be magnified compared with the intermediate image such that the display image (virtual image) can be observed at the viewpoint of the driver 11. In projection optical systems of the conventional HUDs, the optical path length is relatively large and the magnifying power is small, and thus the angle of divergence of the laser-beam bundle is not necessarily so large to observe the displayed image accurately.

However, in order to achieve both the downsizing of the apparatus and the large screen for the display image, as expected in the art in recent years, reduction in the optical path length and increase in magnification are required as implemented in the present example embodiment. In order to implement such reduction in the optical path length and increase in magnification, it is necessary to widen the angle of divergence of the laser-beam bundle.

In such cases, it is desired that the scanning optical system be compatible with the characteristics of the projection optical system in the intermediate image generator (image forming unit). More specifically, it is desired that the laser-beam bundle dispersed at the to-be-scanned surface 8 become wider from the center to periphery (edge) of the to-be-scanned surface 8.

This desired configuration is illustrated in FIG. 7. In order to implement such desired configuration, the incidence angle of the scanning beam on the to-be-scanned surface 8 is made wider from the center to periphery of the to-be-scanned surface 8 in the main-scanning direction (i.e., the X-axis direction).

In so doing, the efficiency becomes optimal if the angle of the main light beam of the scanning beam that enters the to-be-scanned surface 8 matches the angle of the main light beam of the scanning beam that exits from the to-be-scanned surface 8.

However, in reality, it is difficult for these two angles to achieve complete match. In particular, the degree of difficulty further increases when the restriction becomes stricter due to downsizing and increase in the size of the screen.

As described above, it is desired that the beam that enters the to-be-scanned surface 8 have incidence angle distribution that gradually becomes wider from the central portion to the edges in the main-scanning direction of the to-be-scanned surface 8.

Moreover, due to such arrangement of light beam, the light that diverges from the to-be-scanned surface 8 may be controlled to enter the effective range of the concave mirror 9 without loss. Accordingly, the efficiency of the light beam improves.

According to the configuration as described above, the divergence of the light required to observe an image may be minimized. Accordingly, the high brightness of an entire image is achieved, and an image with high visual recognizability is achieved under a wider range of external environment.

The image display apparatus 1000 (i.e., a HUD) according to the example embodiment of the present invention, as described above, is provided for a mobile object (e.g., a vehicle, a ship, and an aircraft), and is provided with the light source 100, the two-dimensional deflector 6, the concave mirror 7, and the to-be-scanned surface 8. Moreover, the image display apparatus 1000 includes an image forming unit that forms an intermediate image by light, and a projection optical system (i.e., the concave mirror 9) that guides the light that forms the intermediate image to the front windshield 10 of the mobile object. The virtual axis ϕ2 that connects the center of the image formed by the image forming unit and the center of the incident laser-beam bundle that enters the concave mirror 9 are oblique in all of the up-and-down directions, right and left directions, and the forward and backward directions of the mobile object.

As a result, the deformation of the virtual image, which is visually recognized through the front windshield 10, due to the shape of the incidence area of the front windshield 10 that the light that forms the intermediate image enters may be attenuated.

Accordingly, the visibility of a virtual image improves with a relatively simple configuration.

The bent shape of the incidence area varies for each mobile object, and the degree of the bend may be very small or very large. In any cases, the image display apparatus 1000 according to the present example embodiment can attenuate the deformation of a virtual image just by making the virtual axis ϕ2 oblique as necessary according to the bent shape of the incidence area. The intermediate image may be made oblique very slightly. In other words, in the image display apparatus 1000 according to the present example embodiment, the visibility of a virtual image improves with a relatively simple configuration in which the general-purpose concave mirror 9 is used as the projection optical system.

By contrast, for example, in the HUD disclosed in JP-4474711-B2, it is necessary to alter the shape of the concave mirror, which serves as the projection optical system, to a special shape according to the bent shape of the incidence area of the front windshield. It is desired that such a complicated configuration be avoided.

As the incidence area is asymmetrically bent in the right and left direction and oblique in the up-and-down directions and forward and backward directions of the mobile object, the virtual axis ϕ2 is oblique in the up-and-down directions, right and left directions, and the forward and backward directions of the mobile object by the angle different from that of the tangent plane of the center of the incidence area.

Accordingly, the visibility of the virtual image improves with reliability.

The intermediate image made is oblique with reference to the right and left directions (i.e., the X-axis direction) of the mobile object when viewed from the forward and backward directions (i.e., the Z-axis direction) of the mobile object. As a result, the deformation of the virtual image due to the horizontally-asymmetrical bent shape of the incidence area of the front windshield 10 may be reduced.

When a right portion of the incidence area is bent backward to a greater degree as in, for example, a vehicle with right-side steering wheel, the intermediate image is made oblique such that a right portion of the image with reference to the right and left directions of the incidence area is displayed downward. Accordingly, the deformation of the virtual image, which is visually recognized through the front windshield 10, can be attenuated with reliability.

In the HUD according to the example embodiment of the present invention, an original image on which shearing deformation is performed is used as an intermediate image. Accordingly, the deformation of the virtual image, which is visually recognized through the front windshield 10, can be attenuated.

When a right portion of the incidence area is bent backward to a greater degree as in, for example, a vehicle with right-side steering wheel, shearing deformation is performed on the original image such that a right portion of the image is displayed on an upper side, and the resultant image (i.e., the image on which shearing deformation has been performed) is formed on the to-be-scanned surface 8. Accordingly, the deformation of the virtual image, which is visually recognized through the front windshield 10, can be attenuated with reliability.

The image forming unit according to the present example embodiment includes the light source 100 that emits the light that is modulated according to image data, the to-be-scanned surface 8, a scanning optical system that includes the two-dimensional deflector 6 and the concave mirror 7 to scan the to-be-scanned surface 8 two-dimensionally by the light from the light source 100 in a main-scanning direction and sub-scanning direction. The projection optical system according to the present example embodiment guides the light that has passed through the to-be-scanned surface 8 to the front windshield 10, and the two-dimensional deflector 6 scans the to-be-scanned surface 8 at high speed in the main-scanning direction and at low speed in the sub-scanning direction. The projection optical system is composed of the single concave mirror 9, and the length of the reflection plane of the concave mirror 9 in the direction corresponding to the main-scanning direction is greater than the distance between the to-be-scanned surface 8 and the reflection plane of the concave mirror 9. Accordingly, the size of the display image is increased, and downsizing of the apparatus is achieved.

The incidence angle at which the light enters the to-be-scanned surface 8 gradually increases from the central portion to the edges in the main-scanning direction of the to-be-scanned surface 8. Accordingly, the utilization efficiency of light is improved, and the visibility of a virtual image improves.

Moreover, the diffusion angle in the direction corresponding to the main-scanning direction of the light that has passed the to-be-scanned surface 8, which corresponds to the scanning angle of the scanning optical system in the main-scanning direction, is greater than the scanning angle, and all the light that has passed through the to-be-scanned surface 8 enters the reflection plane of the concave mirror 9.

As a result, the utilization efficiency of light is further improved and the visual recognizability of the virtual image is further improved.

Accordingly, in a mobile object provided with the image display apparatus according to the present example embodiment, the information (virtual image) that is displayed on the image display apparatus can easily be visually recognized by the driver with reliability.

In the example embodiment described above, the image display apparatus makes an intermediate image oblique and performs shearing deformation on the intermediate image. However, no limitation is intended thereby, and only one of these two processes (i.e., making an intermediate image oblique and performing shearing deformation on the intermediate image) may be performed. The deformation of the deformation of the virtual image can be attenuated to a sufficient degree even when only one of the two processes is performed. In such cases, it is desired that angle of inclination of the intermediate image and the degree of the shearing deformation be adjusted according to the shape of the front windshield.

In the example embodiments described above, the projection optical system is composed of a single mirror (i.e., the concave mirror 9), but no limitation no limitation is intended therein. For example, an optical element such as a mirror or lens may be provided before or after the concave mirror 9. It is desired that the projection optical system be compact and be capable of magnifying and projecting the intermediate image that is formed on the to-be-scanned surface 8.

In the example embodiments described above, the to-be-scanned surface 8 (intermediate image) is arranged obliquely to the XZ-plane, but may be arranged parallel to the XZ-plane. In such cases, it is desired that the intermediate image be formed on the to-be-scanned surface 8 obliquely with reference to the X-axis direction when viewed from the Y-axis direction.

In the example embodiment described above, cases in which a HUD is provided for a vehicle with right-side steering wheel were described. However, no limitation is indicated therein, and the HUD according to an example embodiment of the present invention may be applied to a vehicle with left-side steering wheel in a similar manner. More specifically, because a left portion of the incidence area is bent backward to a greater degree in a vehicle with left-side steering wheel as known in the art, it is desired that the intermediate image be made oblique such that a left portion of the image with reference to the right and left directions of the mobile object is displayed downward. When the to-be-scanned surface 8 is arranged parallel to the XZ-plane, it is desired that the intermediate image be made oblique such that a left portion of the image with reference to the right and left directions of the mobile object is displayed backward. Moreover, in a vehicle with left-side steering wheel, it is desired that shearing deformation be performed in the direction opposite to the images illustrated in FIGS. 9 to 11 in which a right portion of the original image is deformed upward to a greater degree. In other words, it is desired in a vehicle with left-side steering wheel that shearing deformation be performed such that a left portion of the original image is deformed upward to a greater degree.

In the example embodiments described above, the center of the image (intermediate image) is at a position above the center of the incident laser-beam bundle and below the center of the incidence area, with reference to the up-and-down directions of the mobile object (i.e., the Y-axis direction), and the center of incident laser-beam bundle is at a position ahead of the center of the intermediate image and the center of the incidence area, with reference to the forward and backward directions of the mobile object (i.e., the Z-axis direction). However, no limitation is intended therein. Modification may be made as long as the to-be-scanned surface 8 and the concave mirror 9 are arranged with reference to the front windshield 10 such that the angle which the virtual axis ϕ2 connecting the center of the intermediate image to the center of the incident laser-beam bundle forms with a virtual axis ϕ3 (see FIG. 1A) connecting the center of the incident laser-beam bundle to the center of the incidence area is minimized (and the utilization efficiency of light is maximized).

In the example embodiment described above where a vehicle with right-side steering wheel is assumed (and a right portion of the incidence area is bent backward to a greater degree), the center of the incident laser-beam bundle (i.e., the center of the reflection plane of the concave mirror 9), the center of the image (intermediate image) (i.e., the center of the to-be-scanned surface 8), and the center of the incidence area are positioned in the listed order from the -X side to the +X side. However, no limitation is intended therein. For example, when a vehicle with left-side steering wheel is assumed (and a left portion of the incidence area is bent backward to a greater degree), the center of the incident laser-beam bundle (i.e., the center of the reflection plane of the concave mirror 9), the center of the image (intermediate image) (i.e., the center of the to-be-scanned surface 8), and the center of the incidence area may be positioned in the listed order from the +X side to the -X side. Modification may be made as long as the center of the incident laser-beam bundle (i.e., the center of the reflection plane of the concave mirror 9), the center of the image (intermediate image), and the center of the incidence area are positioned in the listed order with reference to the right and left directions of the mobile object (i.e., the X-axis direction).

In the example embodiment described above, shearing deformation is performed on an original image such that the rows of the image are parallel with each other in the main-scanning direction. However no limitation is intended thereby, and shearing deformation may be performed on an original image such that the columns of the image become parallel to each other in the sub-scanning direction. For example, shearing deformation may be performed such that a right portion of the original image is deformed upward to a greater degree in a vehicle with right-side steering wheel, and shearing deformation may be performed such that a left portion of the original image is deformed upward to a greater degree in a vehicle with left-side steering wheel.

In the example embodiment described above, a scanning optical system that includes a two-dimensional deflector is used as the image forming unit of a HUD. However, any other system such as a system with transmissive liquid crystal including a transmissive liquid crystal panel, a system with reflective liquid crystal including a reflective liquid crystal panel, and a digital light processing (DLP) system including a digital micromirror device (DMD) may be used as long as that system can form an intermediate image.

In the example embodiment described above, a minute convex lens arrangement (including a microlens array) is used for a to-be-scanned surface. However, no limitation is intended thereby, and for example, a diffusing board, a transmissive screen, and a reflective screen may be used for a to-be-scanned surface.

In the microlens array according to the example embodiment described above, a plurality of microlenses are two-dimensionally arranged, but may be one-dimensionally or three-dimensionally arranged.

In the example embodiment described above, a two-dimensional deflector performs two-dimensional scanning on a microlens array to form a two-dimensional image. However, no limitation is indicated thereby, and a one-dimensional deflector such as a MEMS mirror, a galvano mirror, a polygon mirror may be used to perform one-dimensional scanning to form a one-dimensional image.

In the example embodiment described above, a color image is generated. However, no limitation is indicated therein, and a monochrome image may be generated instead of the color image.

The transmission and reflection member may be made of a material other than that of the front windshield of a mobile object, and may be arranged between the front windshield and an observer, for example, like a combiner. In such cases, it is desired that at least one of the following processes be performed according to the shape or posture of the transmission and reflection member. That is, one of processes of making the intermediate image oblique in the right and left directions of the mobile object, making the intermediate image oblique in the up-and-down directions of the mobile object, making the virtual axis ϕ2 with reference to the tangent plane, and performing shearing deformation on the intermediate image.

Moreover, the transmission and reflection member is not limited to the front windshield of the mobile object, but may be a different window such as a side glass and a rear glass that is used for the visual recognition of the outside of the mobile object. In the example embodiment described above, the transmission and reflection member is made of glass. However, no limitation is indicated thereby, and the transmission and reflection member may be made of, for example, resin.

With the image display apparatus according to the example embodiment described above, the deformation of a virtual image can effectively be attenuated, in particular, when a transmission and reflection member such as a window of a mobile object and a combiner is bent.

A target (observer) for which a virtual image is made visually recognizable by the image display apparatus according to the present example embodiment is not limited to the driver of the mobile object, but may be, for example, a navigator or passenger who are in the mobile object.

In the example embodiment described above, cases in which the image display apparatus is provided for a mobile object such as a vehicle, an aircraft, and a ship were described. However, no limitation is indicated thereby, and modification may be made as long as the image display apparatus is provided for provided for an object. The term "object" includes not only a mobile object but also an object that is located on a permanent basis or an object that is transportable.

In the example embodiment described above, cases in which the image display apparatus is provided for a mobile object such as a vehicle, an aircraft, and a ship were described. However, no limitation is indicated thereby, and modification may be made as long as the image display apparatus is provided for provided for an object. The term "object" includes not only a mobile object but also an object that is located on a permanent basis or an object that is transportable.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An image display apparatus (1000) configured to be installed on a vehicle having a Z-axis in the forward-backward direction of the vehicle, a Y axis in the up-down direction of the vehicle and an X-axis in the left-right direction of the vehicle, the image display apparatus (1000) comprising:
an image forming unit (6, 7, 8, 100) configured to form an intermediate image on a surface (8); and
an optical system (9) with a mirror configured to guide the light from the intermediate image to form a virtual image on a transmission and reflection member (10) that is bent; the image display apparatus **characterized in that**
a virtual axis that connects a centre of the intermediate image and the centre of the effective reflection area of the mirror is oblique to the Y-axis, X-axis and Z-axis, so that deformation of the virtual image on the transmission and reflection member is minimised.

2. The image display apparatus (1000) according to claim 1, wherein the transmission and reflection member (10) has an incidence area that the light from the optical system (9) enters, and the incidence area is bent asymmetrically in the X-axis and oblique to the Y-axis and Z-axis.

3. The image display apparatus (1000) according to claim 2, wherein the virtual axis is made oblique to the Y-axis, Z-axis and X-axis by an angle that is different to the angle of the tangent plane of the centre of the incidence area.

4. The image display apparatus (1000) according to any one of claims 2 and 3, wherein
the centre of the intermediate image is at a position above the centre of the reflection plane of the mirror (9) and below the centre of the incidence area of the transmission and reflection member (10), with reference to the Y-axis and the centre of the reflection plane of the mirror is at a position ahead of the centre of the intermediate image and the centre of the incidence area of the transmission and reflection member (10), with reference to the Z-axis.

5. The image display apparatus (1000) according to any one of claims 2 to 4, wherein a centre of a reflection plane of the concave mirror, the centre of the intermediate image, and the centre of the incidence area of the transmission and reflection member (10) are positioned in this order, in the X-axis.

6. The image display apparatus (1000) according to any one of claims 1 to 5, wherein the intermediate image and the reflection plane of the mirror are made oblique to an assumed plane that is orthogonal to the Y-axis.

7. The image display apparatus (1000) according to claim 6, wherein an oblique angle which the intermediate image forms with the assumed plane is equal to or greater than an oblique angle which the reflection plane of the mirror forms with the assumed plane.

8. The image display apparatus (1000) according to any one of claims 1 to 7, wherein the distance between the intermediate image and the mirror is shorter than a largest dimension of the reflection plane of the mirror.

9. The image display apparatus (1000) according to any one of claims 1 to 8, wherein the intermediate image is an original image on which shearing deformation is performed on the intermediate image.

10. The image display apparatus (1000) according to any one of claims 1 to 9, wherein
the optical system (9) is comprised of a single mirror,
the image forming unit (6, 7, 8, 100) includes:
a light source (100) configured to emit light modulated according to image data; and
a scanning optical system (6, 7) configured to scan a surface (8) by light from the light source (100), and
the mirror guides the light that has passed through the surface (8) to the transmission and reflection member (10).

11. The image display apparatus (1000) according to claim 10, wherein the mirror is a concave mirror.

12. The image display apparatus (1000) according to any one of claims 1 to 11, wherein
the transmission and reflection member (10) is a front windshield of the vehicle.

13. A vehicle provided with the image display apparatus (1000) according to any one of claims 1 to 12.

## Patentansprüche

1. Bildanzeigevorrichtung (1000), die konfiguriert ist, um bei einem Fahrzeug installiert zu werden, mit einer Z-Achse in die Vor-/Rückwärtsrichtung des Fahrzeugs, einer Y-Achse in die Auf-/Abwärtsrichtung des Fahrzeugs und einer X-Achse in die linkerechte Richtung des Fahrzeugs, wobei die Bildanzeigevorrichtung (1000) Folgendes umfasst:
eine Bilderzeugungseinheit (6, 7, 8, 100), die konfiguriert ist, um ein Zwischenbild auf einer Oberfläche (8) zu bilden; und
ein optisches System (9) mit einem Spiegel, der konfiguriert ist, um das Licht von dem Zwischenbild zu führen, um ein virtuelles Bild auf einem Übertragungs- und Reflexionselement (10) zu bilden, das gebogen ist; wobei die Bildanzeigevorrichtung **dadurch gekennzeichnet ist, dass** eine virtuelle Achse, die eine Mitte des Zwischenbilds und die Mitte des effektiven Reflexionsbereichs des Spiegels schräg zu der Y-Achse, X-Achse und Z-Achse ist, sodass eine Verformung des virtuellen Bilds auf dem Übertragungs- und Reflexionselement minimiert wird.

2. Bildanzeigevorrichtung (1000) nach Anspruch 1, wobei das Übertragungs- und Reflexionselement (10) einen Einfallsbereich aufweist, in den das Licht von dem optischen System (9) eintritt, und der Einfallsbereich asymmetrisch in der X-Achse gebogen und schräg zu der Y-Achse und Z-Achse ist.

3. Bildanzeigevorrichtung (1000) nach Anspruch 2, wobei die virtuelle Achse in einem Winkel schräg zu der Y-Achse, Z-Achse und X-Achse des Objekts ist, der sich von dem Winkel der Tangentialebene der Mitte des Einfallsbereichs unterscheidet.

4. Bildanzeigevorrichtung (1000) nach einem der Ansprüche 2 und 3, wobei die Mitte des Zwischenbilds an einer Position oberhalb der Mitte der Reflexionsebene des Spiegels (9) und unterhalb der Mitte des Einfallsbereichs des Übertragungs- und Reflexionselements (10) in Bezug auf die Y-Achse des Objekts ist, und die Mitte der Reflexionsebene des Spiegels an einer Position vor der Mitte des Zwischenbilds und der Mitte des Einfallsbereichs des Übertragungs- und Reflexionselements (10) in Bezug auf die Z-Achse ist.

5. Bildanzeigevorrichtung (1000) nach einem der Ansprüche 2 bis 4, wobei eine Mitte einer Reflexionsebene des konkaven Spiegels, die Mitte des Zwischenbilds und die Mitte des Einfallsbereichs des Übertragungs- und Reflexionselements (10) in dieser Reihenfolge auf der X-Achse positioniert sind.

6. Bildanzeigevorrichtung (1000) nach einem der Ansprüche 1 bis 5, wobei das Zwischenbild und die Reflexionsebene des Spiegels schräg zu einer angenommenen Ebene ist, die orthogonal zu der Y-Achse ist.

7. Bildanzeigevorrichtung (1000) nach Anspruch 6, wobei ein schiefer Winkel, den das Zwischenbild mit der angenommenen Ebene bildet, gleich wie oder größer als ein schiefer Winkel ist, den die Reflexionsebene des Spiegels mit der angenommenen Ebene bildet.

8. Bildanzeigevorrichtung (1000) nach einem der Ansprüche 1 bis 7, wobei der Abstand zwischen dem Zwischenbild und dem Spiegel kürzer als eine größte Abmessung der Reflexionsebene des Spiegels ist.

9. Bildanzeigevorrichtung (1000) nach einem der Ansprüche 1 bis 8, wobei das Zwischenbild ein Originalbild ist, bei dem eine Scherverformung auf der Zwischenbild ausgeführt wird.

10. Bildanzeigevorrichtung (1000) nach einem der Ansprüche 1 bis 9, wobei das optische System (9) aus einem einzelnen Spiegel besteht,
wobei die Bilderzeugungseinheit (6, 7, 8, 100) Folgendes enthält:
eine Lichtquelle (100), die konfiguriert ist, um ein Licht zu emittieren, das gemäß Bilddaten moduliert wird;
und
ein optisches Scansystem (6, 7), das konfiguriert ist, um eine Oberfläche (8) durch Licht von der Lichtquelle (100) zu scannen, und
wobei der Spiegel das Licht, das durch die Oberfläche (8) verlaufen ist, zu dem Übertragungs- und Reflexionselement (10) führt.

11. Bildanzeigevorrichtung (1000) nach Anspruch 10, wobei der Spiegel ein konkaver Spiegel ist.

12. Bildanzeigevorrichtung (1000) nach einem der Ansprüche 1 bis 11, wobei das Übertragungs- und Reflexionselement (10) eine Frontscheibe des Fahrzeugs ist.

13. Fahrzeug, das mit der Bildanzeigevorrichtung (1000) nach einem der Ansprüche 1 bis 12 bereitgestellt ist.

## Revendications

1. Appareil d'affichage d'image (1000) configuré pour être installé sur un véhicule possédant un axe Z dans la direction longitudinale du véhicule, un axe Y dans la direction verticale du véhicule et un axe X dans la direction transversale du véhicule, l'appareil d'affichage d'image (1000) comprenant :
une unité de formation d'image (6, 7, 8, 100) configurée pour former une image intermédiaire sur une surface (8) ; et
un système optique (9) avec un miroir configuré pour guider la lumière en provenance de l'image intermédiaire pour former une image virtuelle sur un élément de transmission et de réflexion (10) qui est plié ; l'appareil d'affichage d'image étant **caractérisé en ce que**
un axe virtuel qui relie un centre de l'image intermédiaire et le centre de la superficie de réflexion efficace du miroir est oblique à l'axe Y, l'axe X et l'axe Z, pour que la déformation de l'image virtuelle sur l'élément de transmission et de réflexion soit minimisée.

2. Appareil d'affichage d'image (1000) selon la revendication 1, dans lequel l'élément de transmission et de réflexion (10) possède une superficie d'incidence dans laquelle la lumière en provenance du système optique (9) entre, et la superficie d'incidence est pliée de façon asymétrique dans l'axe X et oblique à l'axe Y et l'axe Z.

3. Appareil d'affichage d'image (1000) selon la revendication 2, dans lequel l'axe virtuel est oblique à l'axe Y, l'axe Z et l'axe X de l'objet selon un angle qui est différent de l'angle du plan tangent du centre de la superficie d'incidence.

4. Appareil d'affichage d'image (1000) selon l'une quelconque des revendications 2 et 3, dans lequel le centre de l'image intermédiaire est à une position au-dessus du centre du plan de réflexion du miroir (9) et en dessous du centre de la superficie d'incidence de l'élément de transmission et de réflexion (10), en référence à l'axe Y de l'objet, et le centre du plan de réflexion du miroir est à une position devant le centre de l'image intermédiaire et le centre de la superficie d'incidence de l'élément de transmission et de réflexion (10), en référence à l'axe Z.

5. Appareil d'affichage d'image (1000) selon l'une quelconque des revendications 2 à 4, dans lequel un centre d'un plan de réflexion du miroir concave, le centre de l'image intermédiaire, et le centre de la superficie d'incidence de l'élément de transmission et de réflexion (10) sont positionnés dans cet ordre, dans l'axe X.

6. Appareil d'affichage d'image (1000) selon l'une quelconque des revendications 1 à 5, dans lequel l'image intermédiaire et le plan de réflexion du miroir sont obliques à un plan supposé qui est orthogonal à l'axe Y.

7. Appareil d'affichage d'image (1000) selon la revendication 6, dans lequel un angle oblique que l'image intermédiaire forme avec le plan supposé est égal ou supérieur à un angle oblique que le plan de réflexion du miroir forme avec le plan supposé.

8. Appareil d'affichage d'image (1000) selon l'une quelconque des revendications 1 à 7, dans lequel la distance entre l'image intermédiaire et le miroir est plus courte qu'une dimension la plus grande du plan de réflexion du miroir.

9. Appareil d'affichage d'image (1000) selon l'une quelconque des revendications 1 à 8, dans lequel l'image intermédiaire est une image d'origine sur laquelle une déformation de cisaillement est réalisée sur l'image intermédiaire.

10. Appareil d'affichage d'image (1000) selon l'une quelconque des revendications 1 à 9, dans lequel le système optique (9) est composé d'un seul miroir,
l'unité de formation d'image (6, 7, 8, 100) inclut :
une source de lumière (100) configurée pour émettre de la lumière modulée selon des données d'image ; et
un système optique de balayage (6, 7) configuré pour balayer une surface (8) avec de la lumière provenant de la source de lumière (100), et
le miroir guide la lumière qui est passée à travers la surface (8) vers l'élément de transmission et de réflexion (10).

11. Appareil d'affichage d'image (1000) selon la revendication 10, dans lequel le miroir est un miroir concave.

12. Appareil d'affichage d'image (1000) selon l'une quelconque des revendications 1 à 11, dans lequel l'élément de transmission et de réflexion (10) est un pare-brise avant du véhicule.

13. Véhicule pourvu de l'appareil d'affichage d'image (1000) selon l'une quelconque des revendications 1 à 12.
